# EUROPÄISCHE PATENTSCHRIFT

(11) **EP 1 510 329 B1**
(45) Veröffentlichungstag und Bekanntmachung des Hinweises auf die Patenterteilung: **26.12.2012**
(21) Anmeldenummer: 03019424.5
(22) Anmeldetag: 28.08.2003
(51) Int. Cl.: B29C 73/16

(54) **Mittel zum nachträglichen Abdichten von Fahrzeugluftreifen**
Means for sealing of tyres after damage
Moyen pour rendre étanches des pneumatiques après endommagement

(43) Veröffentlichungstag der Anmeldung: 02.03.2005
(73) Patentinhaber: Continental Reifen Deutschland GmbH, 30165 Hannover (DE)
(72) Erfinder: Kretschmar, Silke, 10318 Berlin (DE); Well, Michael, Dr., 38159 Vechelde (DE)
(74) Vertreter: Finger, Karsten

(56) Entgegenhaltungen:
- EP-A- 0 988 960
- DE-A- 19 652 546
- US-A- 3 676 381
- US-A- 5 648 406
- US-B1- 6 605 654

## Beschreibung

Die Erfindung betrifft ein Mittel zum nachträglichen Abdichten von Fahrzeugluftreifen nach dem Anspruch 1, wobei es im Schadensfall durch das Ventil des Fahrzeugluftreifens in das Reifeninnere befördert wird, in Form einer wässrigen Dispersion, enthaltend zumindest ein Klebharz.

Beim Überfahren von spitzen Gegenständen kann ein Fahrzeugluftreifen Schäden in Form von Rissen oder Löchern erleiden, die zum Luftdruckverlust im Reifen führen. Um solche Schäden zumindest provisorisch, d. h. für eine gewisse Zeitdauer, möglichst sicher abzudichten bis der Fahrzeugluftreifen ausgetauscht werden kann, sind Abdichtmittel bekannt, die nach dem Herausschrauben des Ventileinsatzes oder direkt über das Ventil in den Reifen z. B. mit Hilfe einer Vorrichtung mit Druckquelle und Abdichtmittel eingebracht werden.

Aus der DE 195 45 935 C2 sind z. B. Abdichtmittel auf der Basis von Naturkautschuklatex bekannt, die als mit dem Latex kompatibles Klebstoffharz ein Terpen-Phenol-Harz enthalten. Harz und Kautschuk liegen bevorzugt in einem Gewichtsverhältnis von 4:1 bis 1:1 vor und es kann ein Gefrierschutzmittel enthalten sein.

Auch in der DE 197 53 630 A1 ist ein Abdichtmittel zum nachträglichen Abdichten von Reifen offenbart, welches Naturkautschuklatex, eine Tallölharzester-Dispersion und Monoethylenglykol als Gefrierschutzmittel enthält.

Aus der DE 198 44 177 A1 sind ebenfalls Abdichtmittel auf der Basis von Naturkautschuklatex bekannt. Dieses Dokument zeigt die Merkmale des Oberbegriffs des Anspruchs 1.

In der DE 196 52 546 A1 wird ein Mittel zum nachträglichen Abdichten von Fahrezugluftreifen beschrieben, welches im Schadensfall durch das Ventil in das Reifeninnere befördert wird und welches ein Klebharz enthält. Die dort beschriebenen Abdichtmittel enthalten stets einen Kautschuklatex.

Die vorgenannten Abdichtmittel weisen den Nachteil auf, dass sie durch den Anteil an Naturkautschuklatex nur eine begrenzte Haltbarkeit von ca. 4 Jahren aufweisen. Ferner sind die Abdichtmittel, die Kautschuklatex enthalten, empfindlich gegenüber extremen Temperaturschwankungen, was zu einem vorzeitigen Koagulieren des Latex führen kann. Zusätzlich muss man bei der Herstellung dieser Abdichtmittel die Prozessbedingungen genau kontrollieren, da die Abdichtmittel empfindlich gegen Prozessschwankungen sind

Die US 3,676,381 offenbart selbstabdichtende Auskleidungen für z. B. Fahrzeugluftreifen, die vor dem Schadensfall in den Reifen eingebracht werden und stets im Reifen mitfahren. Sie werden nicht durch das Ventil eingespritzt, sondern nach Entfernung des Ventils in den Reifen eingebracht. Die Auskleidung basiert auf einer verschließend wirkenden Substanz, einem Bindemittel, wie Acrylcopolymeren, einem Klebstoff, wie Maissirup, und einem Verdünnungsmittel.

Der Erfindung liegt die Aufgabe zu Grunde, ein Mittel zum provisorischen Abdichten von Fahrzeugluftreifen bereitzustellen, das eine hohe Haltbarkeit aufweist, unempfindlicher gegen extreme Temperaturschwankungen ist und welches einfach hergestellt werden kann.

Gelöst wird diese Aufgabe erfindungsgemäß dadurch, dassdas zumindest ein Polyacrylat enthältund frei von Naturkautschuk- und/oder Kautschuklatex ist.

Polyacrylate sind Polymere auf der Basis von Estern der Acrylsäure (Polyacrylsäureester), die ggf. weitere Comonomere enthalten können. Als Klebharze gelten klebrig machende Harze.

Ein Abdichtmittel mit der erfindungsgemäßen Zusammensetzung zeichnet sich neben seiner Abdichtwirkung dadurch aus, dass es eine besonders hohe Haltbarkeit aufweist, denn ein vorzeitiges Koagulieren, wie es bei Mitteln auf Kautschuklatex-Basis beobachtet wird, tritt nicht auf. Das Abdichtmittel ist auch stabiler bei extremen Temperaturschwankungen und neigt unter diesen Bedingungen nicht zum Koagulieren, wobei vorzeitiges Koagulieren das Mittel für das Einbringen in einen Reifen über ein Ventil und das Abdichten unbrauchbar macht. Das Abdichtmittel lässt sich zudem einfach herstellen, da Prozessparameter, wie die Rührgeschwindigkeit und die Temperatur, in weiteren Grenzen variiert werden können, ohne dass ein anderes Dichtverhalten des Abdichtmittels befürchtet werden muss.

Die Abdichtwirkung des Mittels beruht vermutlich auf dem Zusammenspiel von Polyacrylat als aushärtendem Abdichtstoff mit dem Klebharz als Substanz, die die Gummiverträglichkeit erhöht und gleichzeitig den Abdichtstoff am Schädigungsort fixiert.

Gemäß einer vorteilhaften Weiterbildung der Erfindung enthält das Abdichtmittel Polyacrylat und Klebharz im Gewichtsverhältnis von 4:1 bis 1:1. Es hat sich herausgestellt, dass bei diesen Gewichtsverhältnissen eine besonders gute Abdichtwirkung erzielt werden kann.

Der Feststoffgehalt des Abdichtmittels, der sich bei Nichtvorhandensein von weiteren Füllstoffen im Wesentlichen aus Polyacrylat und Klebharz zusammensetzt, liegt bevorzugt bei 40 bis 50 Gew.-%, wodurch eine gute Pump- und Einspritzbarkeit des Abdichtmittels in den abzudichtenden Gegenstand bei gleichzeitig guter Dichtwirkung gewährleistet werden kann.

Das Abdichtmittel enthält zumindest ein Polyacrylat, wobei auch mehrere Polyacrylate im Gemisch eingesetzt werden können. Das oder die Polyacrylat(e) basiert bzw. basieren vorteilhafterweise auf Methylacrylat, Ethylacrylat, Butylacrylat, 2-Ethylhexylacrylat und/oder Methylmethacrylat als einem Monomer und ggf. weiteren Comonomeren. Diese Polyacrylate sind in großen Mengen am Markt verfügbar und weisen eine hohe Klebkraft auf. Als weitere Comonomere können beispielsweise Acryl- und Methacrylsäure und deren Amide, Acrylnitril, Vinylchlorid verwendet werden. Über die Wahl und Menge des Comonomeren sind die Eigenschaften der Produkte breit variierbar. Die Polyacrylate werden häufig als wässrige Polymerdispersion mit einem Feststoffanteil von 40 bis 70 Gew.-% bei der Herstellung des Abdichtmittels zugesetzt.

Zumindest ein Klebharz ist im Abdichtmittel enthalten, es können auch mehrere Klebharze im Gemisch verwendet werden, wobei die Harze als eine 45 bis 60 Gew.-%ige Dispersion (Emulsion) z. B. in Wasser vorliegen können. Als Klebharze können natürliche oder synthetische Harze eingesetzt werden, die als Klebrigmacher wirken. Bevorzugt sind die Klebharze ausgewählt aus der Gruppe bestehend aus Estern des Kolophoniums, Terpen-Phenol-Harzen, Alkin-Phenol-Harzen und Cumaron-Harzen. Abdichtmittel mit diesen Klebharzen zeigen eine besonders hohe Klebfestigkeit mit guter Abdichtwirkung und haben einen positiven Einfluss auf die Kompatibilisierung mit anderen Komponenten des Abdichtmittels.

Das Kolophonium, das aus dem Baumharz verschiedener Nadelhölzer gewonnen werden kann, besteht im Wesentlichen aus einem Gemisch aus Harzsäuren und Terpenen. Die Veresterung der entsprechenden Bestandteile des Kolophoniums erfolgt auf herkömmliche Art und Weise. So ist es denkbar, das Kolophonium z. B. mit Alkoholen bzw. Alkoholgemischen umzusetzen. Auch ist es möglich, dass aus dem Kolophonium gewisse Bestandteile, wie z. B. die Abietinsäure, Dehydroabietinsäure, Tetrahydroabietinsäure, Dihydroabietinsäure, deren Isomere und/oder Mischungen hieraus, gewonnen werden und diese Bestandteile einzeln oder gemeinsam mit Alkoholen oder Alkoholgemischen umgesetzt werden. Bevorzugt werden als Alkohole z. B. Methanol, Ethanol, Propan-1,2,3-triol und/oder Pentaerithrithol verwendet.

Terpen-Phenol-Harze sind solche Harze, die durch Säure-katalysierte Addition von Phenolen an Terpene hergestellt werden.

Als Alkin-Phenol-Harz können Harze verwendet werden, die als Alkin z. B. Ethin und als Phenolkomponente z. B. Butylphenol oder Novolacke aus Formaldehyd und z. B. p-tert. Butylphenol (oder p-Diisobutylphenol) enthalten.

Cumaron-Inden-Harze fallen als Copolymere bei der Polymerisation der im Leichtöl des Steinkohlenteers enthaltenen ungesättigten Verbindungen an.

Das Abdichtmittel kann für eine Verwendbarkeit auch bei tiefen Temperaturen, z. B. für einen Einsatz in der kalten Jahreszeit oder in polaren Regionen, zumindest ein Gefrierschutzmittel enthalten. Gefrierschutzmittel, auch Frostschutzmittel genannt, sind Substanzen, die zur Senkung des Gefrierpunktes Verwendung finden.

Bevorzugt beträgt der Anteil an Gefrierschutzmittel bzw. -mitteln 15 bis 35 Gew.-%, bezogen auf das Gesamtgewicht des Abdichtmittels, um eine ausreichende Kältetauglichkeit des Abdichtmittels zu gewährleisten.

Bei den Gefrierschutzmitteln handelt es sich in der Regel um hochsiedende, wasserlösliche, schwer entflammbare organ. Flüssigkeiten wie Diole mit vicinalen OH-Gruppen und einer Kohlenstoffkettenlänge von bis zu 8 Atomen. Durch geeignete Kombination verschiedener Diole kann der gewünschte Gefrierschutz je nach Einsatzgebiet des Reifens eingestellt werden. Vorzugsweise werden das oder - beim Einsatz von Gemischen - die Gefrierschutzmittel ausgewählt aus der Gruppe bestehend aus Ethylenglykol, Propylenglykol und Dipropylenglykol.

Das Abdichtmittel kann weitere übliche Zusatzstoffe in üblichen Mengen enthalten. So können dem Abdichtmittel Alterungsschutz- bzw. Konservierungsmittel zur Sicherung der Einsatzbereitschaft des Abdichtmittels bei Lagerung zugesetzt werden. Ferner kann das Abdichtmittel Dispergiermittel, Emulgiermittel, Schaumstabilisatoren, Tenside und pH-Regulatoren enthalten.

Es ist auch möglich, dem Abdichtmittel Füllstoffe zuzusetzen, die zum Abdichten insbesondere von größeren Löchern beitragen. Als Füllstoffe können z. B. faserige Materialien (Natur- oder Synthesefasern), Kieselsäure, Talk, Kreide, Ruß, Gummimehl oder Ähnliches eingesetzt werden.

Die Herstellung des erfindungsgemäßen Abdichtmittels kann z. B. in der Art erfolgen, dass in einem Rührkessel eine wässrige Polyacrylatdispersion vorgelegt wird und die restlichen Bestandteile, die z. B. in Dispersion/Emulsion mit Wasser vorliegen, unter Rühren zugegeben werden.

Das Abdichtmittel wird zum nachträglichen Abdichten von Fahrzeugluftreifen eingesetzt, wobei es im Schadensfall durch das Ventil des Fahrzeugluftreifen über aus dem Stand der Technik bekannte Vorrichtungen (s. z. B. WO 02066236 A1) in das Reifeninnere befördert wird.

Anhand des folgenden Ausführungsbeispiels soll die Erfindung näher erläutert werden.

Es wurde das folgende Abdichtmittel hergestellt:
- 48 Gew.-% einer wässrigen Butylacrylatdispersion mit einem Festgehalt von 60 Gew.-% (Plextol® X 4324, Polymerlatex GmbH & Co.KG Deutschland)
- 20 Gew.-% einer wässrigen Kolophoniumesterdispersion mit einem Feststoffgehalt von 50 Gew.-% (Hercules GmbH, Deutschland)
- 32 Gew.-% Ethylenglykol.

Mit diesem Abdichtmittel können Fahrzeugluftreifen nach Schäden abgedichtet werden. Das Abdichtmittel weist eine deutlich höhere Haltbarkeit (Stabilität) als Abdichtmittel auf Basis von Naturkautschuk- und/oder Kautschuklatex auf. Auch die Empfindlichkeit gegenüber Temperaturschwankungen und Vibrationen ist gering; sie haben kaum Einfluss auf die Eigenschaften des Abdichtmittels, wie z. B. auf die Viskosität, wobei die Viskosität einen Einfluss auf das Einspritzverhalten in das abzudichtende Objekt hat.

Bei der Herstellung des Dichtmittels haben sich, auch wenn es zu Prozessschwankungen kam, keinerlei Probleme in Bezug auf eine gleichmäßige und haltbare Dispersion ergeben. Mit dem vorgenannten Abdichtmittel wurden Schüttelversuche durchgeführt, wobei als Vergleich ein Abdichtmittel auf Basis von Naturkautschuklatex, wie es in der DE 198 44 177 A1 beschrieben ist, mit geschüttelt und vermessen wurde.

Für die Durchführung der Versuche wurden die Dichtmittel in Polyethylenflaschen gefüllt und auf einer Rüttelmaschine über 36 h unter Rütteln dem folgenden Temperaturprofil unterworfen: 40 °C, 20 °C und 80 °C für jeweils 4 h, dreimaliger Durchlauf dieses Profils. Zur Bewertung der Stabilität des Dichtmittels wurde die Viskosität herangezogen. Die Viskosität vor und nach der thermischen und mechanischen Belastung auf der Rüttelmaschine wurde mit der Auslaufbecher-Methode gemäß DIN EN ISO 2431 bei Raumtemperatur mit einem Düsendurchmesser des Auslaufbechers von 4 mm bestimmt. Die Auslaufzeit korreliert mit der Viskosität der Probe. Es wurden die in der Tabelle 1 dargestellten Auslaufzeiten ermittelt.

**Tabelle 1**

| | Auslaufzeit der frischen, nicht gerüttelten Probe | Auslaufzeit der gerüttelten Probe |
|---|---|---|
| Dichtmittel auf der Basis von Naturkautschuklatex | 18 s | 25 s |
| Erfindungsgemäßes Dichtmittel | 13 s | 15 s |

Das Dichtmittel auf der Basis von Naturkautschuklatex zeigte eine deutliche Erhöhung der Auslaufzeit und damit der Viskosität nach Belastung. Das erfindungsgemäße Dichtmittel mit Polyacrylat, welches frei von Kautschuklatex ist, zeigte nur eine minimale Erhöhung der Auslaufzeit und damit der Viskosität.

Das Dichtmittel auf der Basis von Naturkautschuklatex ist deutlich empfindlicher gegen Temperaturschwankungen und mechanischer Belastung als das erfindungsgemäße Dichtmittel.

## Patentansprüche

1. Mittel zum nachträglichen Abdichten von Fahrzeugluftreifen, wobei es im Schadensfall durch das Ventil des Fahrzeugluftreifens in das Reifeninnere befördert wird, in Form einer wässrigen Dispersion, enthaltend zumindest ein Klebharz, **dadurch gekennzeichnet, dass** das Mittel zumindest ein Polyacrylat enthält und frei von Naturkautschuk- und/oder Kautschuklatex ist.

2. Mittel nach Anspruch 1, **dadurch gekennzeichnet, dass** es Polyacrylat und Klebharz im Gewichtsverhältnis von 4:1 bis 1:1 enthält.

3. Mittel nach Anspruch 1 oder 2, **dadurch gekennzeichnet, dass** der Feststoffgehalt 40 bis 50 Gew.-% beträgt.

4. Mittel nach zumindest einem der vorhergehenden Ansprüche, **dadurch gekennzeichnet, dass** das oder die Polyacrylate(e) auf Methylacrylat, Ethylacrylat, Butylacrylat, 2-Ethylhexylacrylat und/oder Methylmethacrylat und ggf. weiteren Comonomeren basiert bzw. basieren.

5. Mittel nach zumindest einem der vorhergehenden Ansprüche, **dadurch gekennzeichnet, dass** das oder die Klebharz(e) ausgewählt ist bzw. sind aus der Gruppe bestehend aus Estern des Kolophoniums, Terpen-Phenol-Harzen, Alkin-Phenol-Harzen und Cumaron-Inden-Harzen.

6. Mittel nach zumindest einem der vorhergehenden Ansprüche, **dadurch gekennzeichnet, dass** es zumindest ein Gefrierschutzmittel enthält.

7. Mittel nach Anspruch 6, **dadurch gekennzeichnet, dass** der Anteil an Gefrierschutzmittel, bezogen auf das Gesamtgewicht des Mittels zum Abdichten, 15 bis 35 Gew.-% beträgt.

8. Mittel nach zumindest einem der vorhergehenden Ansprüche, **dadurch gekennzeichnet, dass**, das oder die Gefrierschutzmittel ausgewählt ist bzw. sind aus der Gruppe bestehend aus Ethylenglykol, Propylenglykol und Dipropylenglykol.

## Claims

1. Composition for the subsequent sealing of pneumatic vehicle tyres, being conveyed, in the event of damage, through the valve of the pneumatic vehicle tyre into the tyre interior, in the form of an aqueous dispersion comprising at least one tackifier resin, **characterized in that** the composition comprises at least one polyacrylate and is free from natural-rubber latex and/or rubber latex.

2. Composition according to Claim 1, **characterized in that** it comprises polyacrylate and tackifier resin in a weight ratio of 4:1 to 1:1.

3. Composition according to Claim 1 or 2, **characterized in that** the solids content is 40% to 50% by weight.

4. Composition according to at least one of the preceding claims, **characterized in that** the polyacrylate or polyacrylates is or are based on methyl acrylate, ethyl acrylate, butyl acrylate, 2-ethylhexyl acrylate and/or methyl methacrylate and optionally further comonomers.

5. Composition according to at least one of the preceding claims, **characterized in that** the tackifier resin or resins is or are selected from the group consisting of esters of rosin, terpenephenolic resins, alkyne-phenolic resins and coumarone-indene resins.

6. Composition according to at least one of the preceding claims, **characterized in that** it comprises at least one antifreeze agent.

7. Composition according to Claim 6, **characterized in that** the fraction of antifreeze agent, based on the total weight of the composition for sealing, is 15% to 35% by weight.

8. Composition according to at least one of the preceding claims, **characterized in that** the antifreeze agent or agents is or are selected from the group consisting of ethylene glycol, propylene glycol and dipropylene glycol.

## Revendications

1. Agent pour l'étanchéification ultérieure de pneus de véhicules, lequel, en cas d'endommagement, est introduit à l'intérieur du pneu à travers la soupape du pneu de véhicule sous la forme d'une dispersion aqueuse contenant au moins une résine adhésive, **caractérisé en ce que** l'agent contient au moins un polyacrylate et est exempt de latex de caoutchouc naturel et/ou de latex de caoutchouc.

2. Agent selon la revendication 1, **caractérisé en ce qu'**il contient du polyacrylate et de la résine adhésive dans un rapport pondéral de 4:1 à 1:1.

3. Agent selon la revendication 1 ou 2, **caractérisé en ce que** la teneur en matières solides vaut de 40 à 50 % en poids.

4. Agent selon au moins l'une quelconque des revendications précédentes, **caractérisé en ce que** le ou les polyacrylate(s) est ou sont à base d'acrylate de méthyle, d'acrylate d'éthyle, d'acrylate de butyle, d'acrylate de 2-éthylhexyle et/ou de méthacrylate de méthyle et éventuellement d'autres comonomères.

5. Agent selon au moins l'une quelconque des revendications précédentes, **caractérisé en ce que** la ou les résines adhésives sont choisies dans le groupe constitué par les esters de colophane, les résines de terpène-phénol, les résines d'alcyne-phénol et les résine de coumarone-indène.

6. Agent selon au moins l'une quelconque des revendications précédentes, **caractérisé en ce qu'**il contient au moins un agent antigel.

7. Agent selon la revendication 6, **caractérisé en ce que** la proportion d'agent antigel, par rapport au poids total de l'agent d'étanchéification, est de 15 à 35 % en poids.

8. Agent selon au moins l'une quelconque des revendications précédentes, **caractérisé en ce que** le ou les agents antigels sont choisis dans le groupe constitué par l'éthylène glycol, le propylène glycol et le dipropylène glycol.
